Europäisches Patentamt

European Patent Office

Office européen des brevets

(11) Veröffentlichungsnummer: **0 347 732**
**A2**

(12) # EUROPÄISCHE PATENTANMELDUNG

(21) Anmeldenummer: **89110758.3**

(51) Int. Cl.⁴: **G01F 1/68**

(22) Anmeldetag: **14.06.89**

(30) Priorität: **21.06.88 DE 3820853**

(43) Veröffentlichungstag der Anmeldung:
**27.12.89 Patentblatt 89/52**

(84) Benannte Vertragsstaaten:
**CH DE FR GB IT LI SE**

(71) Anmelder: **TESTOTERM MESSTECHNIK GMBH
& CO.
Kolumban-Kayser-Strasse 17
D-7825 Lenzkirch(DE)**

(72) Erfinder: **Demisch, Ulrich, Dr. Dipl.-Phys.
Hildastrasse 42
D-7800 Freiburg(DE)**
Erfinder: **Oberle, Peter, Dipl.-Phys.
Burgplatz 6
D-7713 Hüfingen(DE)**
Erfinder: **Rombach, Martin
Am Sommerberg 5
D-7825 Lenzkrich(DE)**

(74) Vertreter: **Patentanwälte Dipl.-Ing. Klaus
Westphal Dr. rer. nat. Bernd Mussgnug Dr.
rer.nat. Otto Buchner
Waldstrasse 33
D-7730 VS-Villingen(DE)**

(54) **Elektrischer Strömungssensor.**

(57) Es wird ein elektrischer Strömungssensor beschrieben, dessen rotationssymmetrische Oberfläche einem anströmenden Fluid zum Messen der Geschwindigkeit des Fluids ausgesetzt wird. Die rotationssymmetrische Oberfläche wird von einem Körper aus gut wärmeleitendem Material gebildet, in dessen Innerem ein elektrischer Widerstand in einer Sackbohrung angeordnet ist. Der elektrische Widerstand steht in gutem Wärmeaustausch mit der Wandung der Sackbohrung. Er wird durch Stromzufuhr auf eine vorbestimmte Temperatur eingeregelt, wobei der zugeführte Strom gemessen wird und als Maß für die Strömungsgeschwindigkeit dient.

## Elektrischer Strömungssensor

Die Erfindung betrifft einen elektrischen Strömungssensor nach dem Oberbegriff des Anspruchs 1.

Bekannte Strömungssensoren dieser Art werden vielfach zur Messung von Strömungsverhältnissen, z.B. der Luft in klimatisierten Räumen, verwendet. Dabei wird ein elektrischer Widerstand durch Stromzufuhr auf eine Temperatur oberhalb der Temperatur der anströmenden Luft oder eines anderen anströmenden Fluids erhitzt, z.B. auf 100°C. Die Strömung kühlt diesen Widerstand nun ab, so daß sein Widerstandswert sich verändert. Über eine elektronische Regelung wird so lange Strom nachgeführt, bis der Strömungssensor wieder die konstante Temperatur von 100°C erreicht hat. Der zugeführte Strom dient als Maß für die Strömungsgeschwindigkeit. Dabei wird der Widerstand der Luftströmung ausgesetzt.

Gerade bei der Messung von Strömungsverhältnissen der Luft in klimatisierten Räumen, wofür die Meßge räte vielfach benötigt werden, wechselt aber die Strömungsrichtung der Luft fortwährend, so daß die Meßergebnisse verfälscht werden, wenn der Strömungssensor nicht richtungsunabhängig ist. Strömungssensoren mit eckiger oder unregelmäßiger äußerer Form werden unterschiedlich stark abgekühlt, je nachdem, aus welcher Richtung sie angeströmt werden. Es können also unterschiedliche Meßergebnisse bei verschiedenen Strömungsrichtungen zustande kommen. Genügend richtungsunabhängig kann ein Strömungssensor nur sein, wenn er weitgehend kugelförmig ist.

Bei einem bekannten Strömungssensor der eingangs genannten Art hat man deshalb Kugeln verwendet, die mit Hilfe der Dünnschichttechnologie mit einer dünnen Metallschicht bedampft sind, welche als elektrischer Leiter sowohl die Kugel erhitzen als auch gleichzeitig den elektrischen Widerstand der Schicht messen kann. Die Herstellung dieser Strömungssensoren ist jedoch äußerst aufwendig und daher sehr kostspielig.

Bei anderen bekannten Meßgeräten besteht der Strömungssensor aus einem im Handel erhältlichen NTC-Widerstand.

Die im Handel üblicherweise erhältlichen NTC-Widerstände sind jedoch nicht rotationssymmetrisch und führen daher zu Meßungenauigkeiten. Überdies sind die NTC-Widerstände an ihren elektrischen Verbindungsleitungen äußerst zerbrechlich aufgehängt, um die Anströmungsbedingungen nicht zu verändern.

Der Erfindung liegt daher die Aufgabe zugrunde, einen elektrischen Strömungssensor zu schaffen, der weitgehend unabhängig von der Strömungsrichtung des Fluids dessen Geschwindigkeit mißt, der aber deenoch vergleichsweise kostengünstig herstellbar ist.

Diese Aufgabe wird bei einem Strömungssensor der eingangs genannten Art erfindungsgemäß durch die kennzeichnenden Merkmale des Anspruchs 1 gelöst.

Der erfindungsgemäße Strömungssensor ist nach außen rotationssymmetrisch, so daß Messungen weitgehend unabhängig von der Strömungsrichtung des anströmenden Fluids vorgenommen werden können. Die Bauteile des Strömungssensors, z.B. eine Metallkugel oder dergl. und ein gewöhnlicher elektrischer Widerstand, sind relativ billig, das Herstellungsverfahren des Strömungssensors ist unkompliziert, der Strömungssensor also kostengünstig herstellbar.

Ferner zeichnet sich der erfindungsgemäße Strömungssensor durch vergleichsweise große mechanische Stabilität und Robustheit aus, da sich der elektrische Widerstand im Inneren des rotationssymmetrischen Körpers befindet und daher mechanischen Beanspruchungen nicht -wie die Strömungssensoren nach dem Stand der Technik -direkt ausgesetzt ist.

Die Unteransprüche sind auf vorteilhafte Ausgestaltungen der Erfindung gerichtet.

Besonders vorteilhaft ist die Verwendung eines NTC-Widerstands nach Anspruch 2, denn dessen Widerstanswert verändert sich - im Gegenssatz zu den bei der Dünnschichttechnologie verwendeten Widerständen - schon bei kleinen Temperaturschwankungen stark, was die Meßgenauigkeit erhöht.

Bei den Strömungssensoren nach Anspruch 2 kann man sich in der Herstellung den gesamten Aufwand der Dünnschichttechnologie ersparen und erzielt hinsichtlich der Meßgenauigkeit fast gleiche Eigenschaften. Ferner ist der NTC-Widerstand von seinen technischen Daten her sehr gut bekannt. Auch wird bei der erfindungsgemäßen Anordnung die Aufhängung des NTC-Widerstandes praktisch nicht beansprucht.

Durch eine Ausgestaltung nach Anspruch 3 soll gewährleistet werden, daß ein guter Wärmeaustausch zwischen dem rotationssymmetrischen Körper und dem Widerstand hergestellt wird.

Anspruch 4 betrifft eine vorteilhafte Halterung des Strömungssensors.

Anspruch 5 legt eine günstige Größe des Sensors fest und durch eine Ausgestaltung nach Anspruch 6 soll eine Schwankung der Temperatur des anströmenden Fluids kompensiert werden.

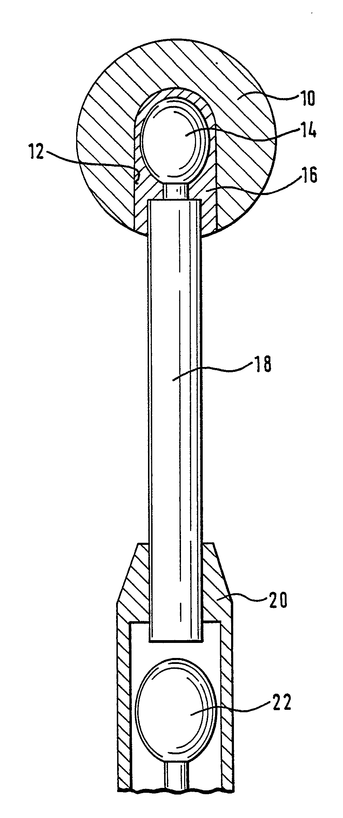

Anhand der Zeichnung wird ein Ausführungsbeispiel der Erfindung näher erläutert. Die Figur zeigt einen Längsschnitt des elektrischen Strömungssensors.

Eine Kugel 10 ist der anströmenden Raumluft bzw. anderen Gasen oder Flüssigkeiten ausgesetzt. Sie besteht aus gut wärmeleitendem Metall, um eine Abkühlung durch die Außenluft schnell auf einen NTC-Widerstand 14 übertragen zu können. Der NTC-Widerstand 14 ist in einer Sackbohrung 12 innerhalb der Kugel 10 angeordnet. Ein Silberleitkleber 16 stellt eine wärmeleitende Verbindung zwischen dem Widerstand 14 und der Kugel 10 her und ermöglicht den Wärmeaustausch zwischen der Kugel 10 und dem NTC-Widerstand 14. Eine wärmeleitende Verbindung kann jedoch auch mit anderen zweckmäßigen Mitteln hergestellt werden.

Da die Kugel 10 nur etwa 5 mm Durchmesser hat, wird eine Abkühlung durch die Luftströmung genügend schnell nach innen auf den NTC-Widerstand übertragen, so daß sich dessen Widerstandswert verändert.

Der NTC-Widerstand 14 ist an einer die Kugel 10 tragenden Haltestange 18 befestigt. Die Haltestange 18 ragt aus einem Gehäuse 20 hervor, in welchem ein zweiter NTC-Widerstand 22 angeordnet ist. Dieser zweite NTC-Widerstand 22 hat die Aufgabe, den Einfluß der Lufttemperatur auf die Meßergebnisse des in der Kugel 10 angeordneten NTC-Widerstands 14 zu kompensieren. Die Temperaturkompensation kann jedoch auch auf andere Art und Weise bewerkstelligt werden.

## Ansprüche

1. Elektrischer Strömungssensor mit rotationssymmetrischer Oberfläche, die einem anströmenden Fluid ausgesetzt ist, wobei der Strömungssensor einen mit der Oberfläche in Wärmeaustausch stehenden elektrischen Widerstand aufweist, der durch Stromzufuhr auf eine vorbestimmte Temperatur eingeregelt wird, wobei der zugeführte Strom gemessen wird und als Maß für die Strömungsgeschwindigkeit dient, dadurch gekennzeichnet, daß die rotationssymmetrische Oberfläche von einem rotationssymmetrischen Körper (10) aus gut wärmeleitendem Material gebildet ist, der eine Sackbohrung (12) aufweist, in welcher der elektrische Widerstand (14) in gutem Wärmeaustausch mit deren Wandung angeordnet ist.

2. Elektrischer Strömungssensor nach Anspruch 1, dadurch gekennzeichnet, daß der elektrische Widerstand ein NTC-Widerstand oder ein Metallfilmwiderstand ist.

3. Elektrischer Strömungssensor nach Anspruch 1 oder 2, dadurch gekennzeichnet, daß der elektrische Widerstand über einen Metalleitkleber (16), insbesondere Silberleitkleber, mit der Wandung der Sackbohrung (12) verbunden ist.

4. Elektrischer Strömungssensor nach einem der vorhergehenden Ansprüche, dadurch gekennzeichnet, daß der Widerstand (14) an einer den rotationssymmetrischen Körper (10) tragenden Haltestange (18) befestigt ist.

5. Elektrischer Strömungssensor nach einem der vorhergehenden Ansprüche, dadurch gekennzeichnet, daß die Kugel (10) einen Durchmesser von 2 bis 6 mm, vorzugsweise 5 mm aufweist.

6. Elektrischer Strömungssensor nach Anspruch 4 oder 5, dadurch gekennzeichnet, daß die Haltestange (18) aus einem Gehäuse (20) hervorsteht, in dem ein zweiter Widerstand (22) zur Temperaturkompensation angeordnet ist.